# EUROPÄISCHE PATENTSCHRIFT

(11) **EP 3 143 858 B1**
(45) Veröffentlichungstag und Bekanntmachung des Hinweises auf die Patenterteilung: **17.01.2018**
(21) Anmeldenummer: 16401055.5
(22) Anmeldetag: 05.09.2016
(51) Int. Cl.: A01C 15/12, E01C 19/20, A01C 15/00

(54) **GEZOGENE VERTEILMASCHINE**
PULLED DISTRIBUTION MACHINE
MACHINE DE DISTRIBUTION TRACTÉ

(30) Priorität: 18.09.2015 DE 102015115758
(43) Veröffentlichungstag der Anmeldung: 22.03.2017
(73) Patentinhaber: Amazonen-Werke H. Dreyer GmbH & Co. KG, 49205 Hasbergen (DE)
(72) Erfinder: Dieckmann, Michael, 48161 Münster (DE)

(56) Entgegenhaltungen:
- EP-A2- 2 799 619
- WO-A1-2013/106211
- WO-A1-2013/182700
- AU-B2- 642 245
- DE-A1- 1 459 713
- DE-A1- 2 250 808
- DE-C2- 4 408 016
- US-A- 5 950 933

## Beschreibung

Die Erfindung betrifft eine gezogene Verteilmaschine gemäß des Oberbegriffes des Patentanspruches 1.

Eine derartige gezogene Verteilmaschine ist in DE 44 08 016 C2 beschrieben. Bei dieser Verteilmaschine erstreckt sich das Entlastungselement über die gesamte Länge des Vorratsbehälters. Durch das Entlastungselement wird das Transportband entlastet, so dass der gesamte sich im Vorratsbehälter befindliche Materialvorrat nicht im vollen Umfang auf dem Transportband lastet. Hierdurch wird eine bessere Förderung des Materials aus dem Vorratsbehälter zu dem Streuorgan erreicht. Dadurch, dass sich das Entlastungselement über die gesamte Vorratsbehälterlänge erstreckt, wird durch das Transportband das Material zunächst im hinteren Bereich des Vorratsbehälters beginnend entnommen, d.h. es wird zunächst der der Zugdeichsel abgewandte Bereich des Vorratsbehälters entleert. Hierdurch wird das auf die Zugdeichsel lastende Gewicht und somit die von der Zugdeichsel zu übernehmende Stützlast zunehmend größer, weil die Entlastung durch das sich hinter der Achse des Fahrwerks zunehmend geringere, sich dort befindliche Material abnimmt. Hierdurch besteht die Gefahr, dass die Stützlast einen unzulässigen Wert erreicht.
Der Erfindung liegt die Aufgabe zu Grunde, in einfacher Weise zu erreichen, dass das auszubringende Material zunächst vornehmlich aus dem vorderen, der Zugdeichsel zugewandten Bereich des Vorratsbehälters durch das Transportband entnommen wird.
Diese Aufgabe der erfindungsgemäß dadurch gelöst, dass das Entlastungselement sich von der der Zugdeichsel abgewandten Endseite des Vorratsbehälters in Richtung der Zugdeichsel über nicht mehr als ¾ der Länge, vorzugsweise nicht mehr als die halbe Länge des Vorratsbehälters oder Transportbandes erstreckt.
Infolge dieser Maßnahme wird in überraschend einfacher Weise erreicht, dass das Material durch das Transportband zunächst im vorderen Bereich des Vorratsbehälters entnommen und dem Streuorgan zugeleitet wird. Hierdurch nimmt die von der Zugdeichsel und Anhängerkupplung des die gezogene Verteilmaschine ziehenden Ackerschleppers aufzunehmende Stützlast ab. Somit ist sichergestellt, dass die Stützlast die zulässigen Werte nicht überschreitet. Hierbei ist die Länge des Entlastungselementes so gewählt, dass nur soviel Material aus dem vorderen Bereich des Vorratsbehälters entnommen wird, dass keine negative Stützlast an der Zugdeichsel auftritt.

Damit keine negative Stützlast an der Deichsel auftritt, ist vorgesehen, dass sich das Entlastungselement in Draufsicht zumindest annähernd bis zur Achse oder Mittelachse des Fahrwerkes erstreckt.

Damit sichergestellt ist, dass bevorzugt aus dem vorderen Bereich des Vorratsbehälters das auszubringende Material von dem Transportband entnommen und dem Streuorgan zugeführt wird, ist vorgesehen, dass in dem der Zugdeichsel unmittelbar benachbarten Viertel, vorzugsweise Drittel der Länge des Vorratsbehälters und/oder des Förderbandes kein Entlastungselement angeordnet ist.

Damit zunächst nicht oder nicht zu viel Material in nachteiliger Weise aus dem hinteren Bereich des Vorratsbehälters entnommen wird, ist in einer bevorzugten Ausgestaltung vorgesehen, dass das Entlastungselement sich zumindest annähernd bis zur Achse oder Mittelachse des Fahrwerkes, jedoch über nicht mehr als ¾, vorzugsweise 2/3 der Länge des Vorratsbehälters erstreckt.

Insbesondere bei den ein schlechtes Rieselverhalten aufweisenden Materialien ist es vorteilhaft, wenn vorgesehen ist, dass in den Dachflächen des Entlastungselementes mehrere Durchtrittsöffnungen für das körnige Material angeordnet sind. Hierdurch ist es möglich, dass durch die Durchtrittsöffnungen Material im hinteren Bereich des Vorratsbehälters nach unten hindurch treten kann, so dass in kontrollierter Weise gleichzeitig neben dem bevorzugten Entnehmen aus dem vorderen Bereich des Vorratsbehälters auch aus dem hinteren Bereich des Vorratsbehälters in kontrollierter Weise Material von dem Transportband in Richtung des Streuorgans ausgetragen wird.

Um die Zuführung des Materiales aus dem hinteren Bereich bei dem bevorzugten Entnehmen des Materials aus dem vorderen Bereich in gezielter Weise auf die verschiedenen Riesel- und Nachfließeigenschaften des auszubringenden Materials in einfacher Weise anpassen zu können, ist vorgesehen, dass die Durchtrittsöffnungen durch zumindest ein Abdeckelement zumindest teilweise abdeckbar und/oder verschließbar sind.

Hierbei können in einer Ausführungsform die Abdeckelemente als Verschlußstopfen ausgebildet sein.

In einer anderen Ausgestaltung ist vorgesehen, dass das Abdeckelement als Abdeckplatte, vorzugsweise als dachförmige und an die Kontur des Entlastungselementes angepasste Abdeckplatte ausgebildet ist.

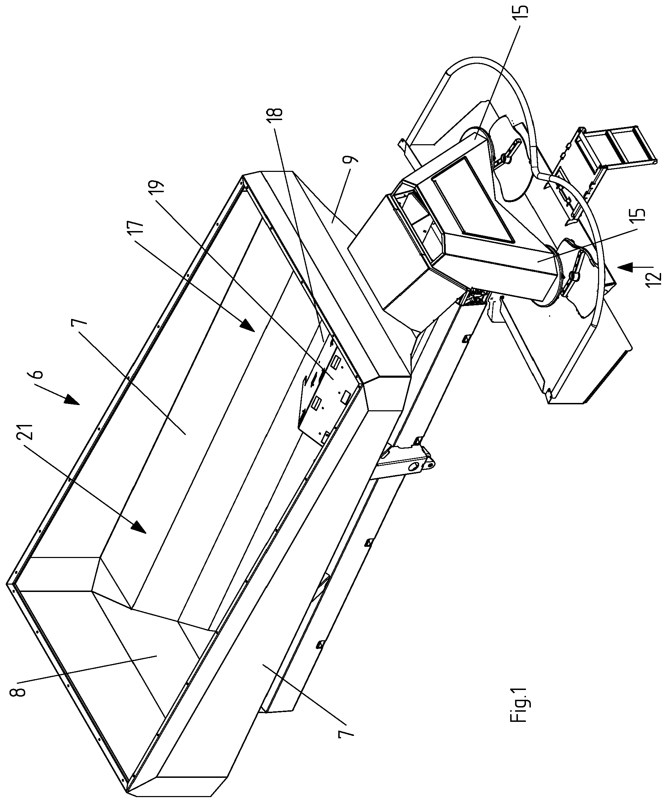

Weitere Einzelheiten der Erfindung sind der Beispielsbeschreibung und den Zeichnungen zu entnehmen. Die Zeichnungen zeigen
- Fig.1: die als Großflächendüngerstreuer ausgebildete Verteilmaschine ohne Tragrahmen, Fahrwerk und Zugdeichsel in Prinzipdarstellung und in perspektivischer Darstellung in der Ansicht von schräg hinten,
- Fig.2: den hinteren Bereich des Großflächendüngerstreuers in Prinzipdarstellung und in perspektivischer Darstellung in der Ansicht von schräg vorne,

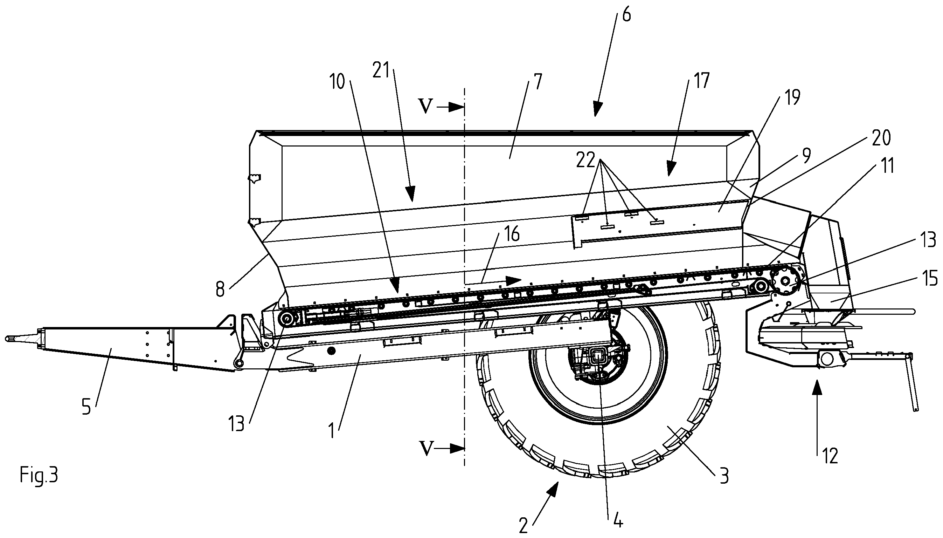

- Fig.3: den Großflächendüngerstreuer in Prinzipdarstellung, in Seitenansicht und im Schnitt III - III,

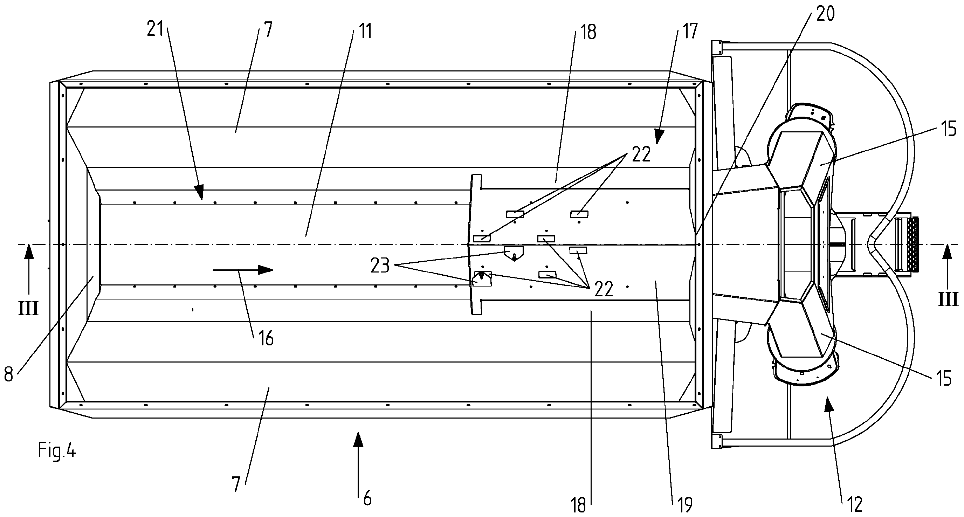

- Fig.4: den Großflächendüngerstreuer in Prinzipdarstellung und in der Draufsicht und

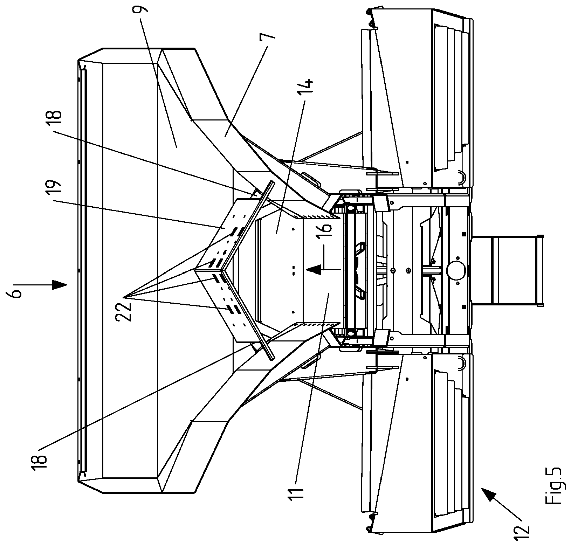

- Fig.5: den Großflächendüngerstreuer in Prinzipdarstellung und im Schnitt V - V.

Die als Großflächendüngerstreuer ausgebildete Verteilmaschine weist den Tragrahmen 1, der sich über das Fahrwerk 2 mit den Laufrädern 3 und der Achse 4 im hinteren Bereich auf dem Boden und über die am vorderen Bereich des Tragrahmens 1 angeordnete Zugdeichsel 5 an einer Vorrichtung eines nicht dargestellten Ackerschleppers abstützt, auf. Auf dem Tragrahmen 1 ist der Vorratsbehälter 6 angeordnet und befestigt. Der Vorratsbehälter 6 weist die beiden seitlichen Vorratsbehälterwände 7 auf, die trichterförmig zueinander angeordnet sind. Weiterhin weist der Vorratsbehälter 6 eine vordere Vorratsbehälterwand 8 und eine hintere Vorratsbehälterwand 9 auf. Der Vorratsbehälter 6 weist einen Boden 10 auf, der als ein Transportband 11 zum Materialfördern aus in dem Behälter 6 enthaltenen körnigem Material zu einem am hinteren Ende des Transportbandes angeordneten Streuorgan 12. Dieses Streuorgan 12 weist zwei um aufrechte und beabstandet zueinander angeordnete Achsen rotierend angetriebene mit Wurfschaufeln besetzten Schleuderscheiben in nicht dargestellter Weise auf. Das Transportband 11 ist im unteren Bereich des Vorratsbehälters 6 angeordnet und als ein über Umlenkrollen 13 geführtes, umlaufend angetriebenes Förderband ausgebildet. Das Transportband 11 erstreckt sich über die gesamte untere Breite des Vorratsbehälters 6. In der hinteren Vorratsbehälterwand 9 ist eine Durchtrittsöffnung 14 angeordnet, durch welche das Förderband 11 das sich im Vorratsbehälter 6 befindliche körnige Material über Leiteinrichtungen 15 den Schleuderscheiben des Streuorgan 12 zuleitet.

Im unteren und in Förderrichtung 16 des Transportbandes 11 gesehen, hinteren Bereich 17 des Vorratsbehälters 6 ist oberhalb des Transportbandes 11 ein das Transportband 11 in zwei im Abstand zueinander entstehende Förderbereiche 18 aufteilendes, dachförmig ausgebildetes und sich über den hinteren Teilbereich 10 der Länge des Vorratsbehälters 6 und des Transportbandes 11 erstreckendes Entlastungselement 19 angeordnet ist. Das Entlastungselement 19 sich von der der Zugdeichsel 5 abgewandten Endseite 20 des Vorratsbehälters 6 in Richtung der Zugdeichsel 5 über nicht mehr als ¾ der Länge, vorzugsweise nicht mehr als die halbe Länge des Vorratsbehälters 6 oder Transportbandes als erstreckt, wie die Zeichnungen zeigen. Im Ausführungsbeispiel erstreckt sich das Entlastungselement 19 in Draufsicht bis über Achse 4 des Fahrwerkes 2 erstreckt. Somit ist in dem der Zugdeichsel 5 unmittelbar benachbarten Viertel, vorzugsweise Drittel der Länge des Vorratsbehälters 6 und/oder des Förderbandes als kein Entlastungselement 19 angeordnet ist.

Erste Versuche haben gezeigt, dass es vorteilhaft ist, wenn sich das Entlastungselement 19 zumindest annähernd bis zur Achse oder Mittelachse des Fahrwerkes 2, jedoch über nicht mehr als ¾, vorzugsweise 2/3 der Länge des Vorratsbehälters 6 erstreckt.

Durch die vorbeschriebene Anordnung des Entlastungselementes 19 in dem hinteren Bereich 17 des Vorratsbehälters 6 wird erreicht, dass das Material durch das Transportband 11 zunächst im vorderen Bereich 21 des Vorratsbehälters 6 entnommen und dem Streuorgan 12 zugeleitet wird. Hierdurch nimmt die von der Zugdeichsel 5 und Anhängerkupplung des die gezogene Verteilmaschine ziehenden Ackerschleppers aufzunehmende Stützlast ab. Somit ist sichergestellt, dass die Stützlast die zulässigen Werte nicht überschreitet. Hierbei ist die Länge des Entlastungselementes 19 so gewählt, dass nur soviel Material aus dem vorderen Bereich 21 des Vorratsbehälters 6 entnommen wird, dass keine negative Stützlast an der Zugdeichsel 5 auftritt. Damit keine negative Stützlast an der Deichsel auftritt, erstreckt sich das Entlastungselement in Draufsicht zumindest annähernd bis zur Achse des Fahrwerkes. Durch die erfindungsgemäße Anordnung des Entlastungselementes 19 wird bevorzugt aus dem vorderen Bereich 21 des Vorratsbehälters 6 das auszubringende Material von dem Transportband 11 entnommen und dem Streuorgan 12 zugeführt.

In den Dachflächen des Entlastungselementes 19 sind mehrere Durchtrittsöffnungen 22 für das körnige Material angeordnet sind. Durch diese Durchtrittsöffnungen 22 kann Material, welches sich auf der Oberseite des Entlastungselementes 19 befindet, in Richtung des Transportbandes 11 hindurchtreten. Dieses ist insbesondere bei den ein schlechtes Rieselverhalten aufweisenden Materialien vorteilhaft. Hierdurch ist es möglich, dass durch die Durchtrittsöffnungen 22 Material im hinteren Bereich des Vorratsbehälters 6 nach unten hindurchtreten kann, so dass in kontrollierter Weise gleichzeitig neben dem bevorzugten Entnehmen aus dem vorderen Bereich 21 des Vorratsbehälters 6 auch aus dem hinteren Bereich 17 des Vorratsbehälters 6 in kontrollierter Weise Material von dem Transportband 11 in Richtung des Streuorgans 12 ausgetragen wird.

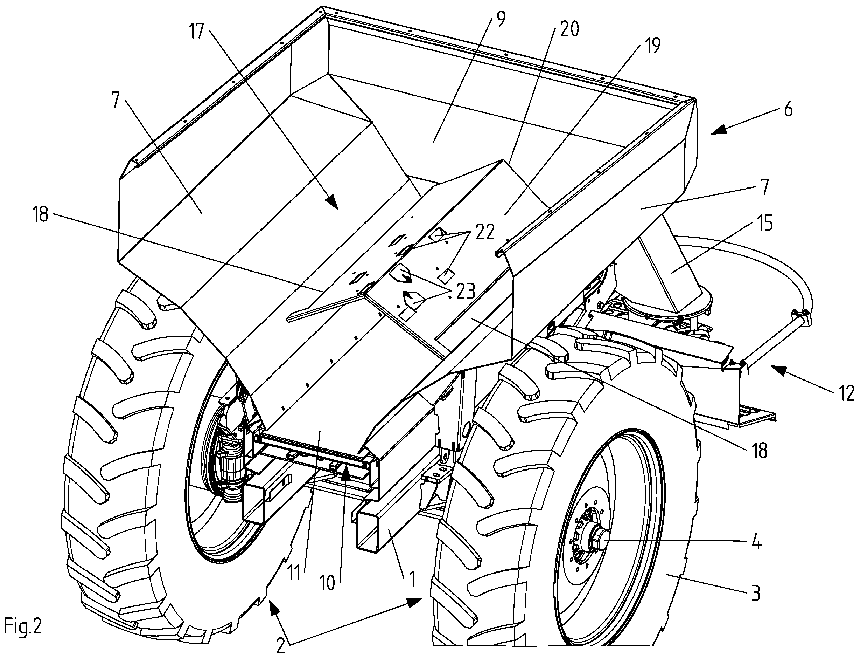

Die vor erwähnten Durchtrittsöffnungen 22 in dem Entlastungselement 19 können durch Abdeckelemente 23 zumindest teilweise abdeckt oder verschlossen werden. In der Fig. 2 sind zwei als Abdeckplättchen 23 ausgebildete Abdeckelemente beispielhaft dargestellt. Selbstverständlich können auch alle oder weitere Durchtrittsöffnungen 22 mit diesen Abdeckplättchen 23 abgedeckt oder verschlossen werden. Hierduch lässt sich die Zuführung des Materiales aus dem hinteren Bereich 17 bei dem bevorzugten Entnehmen des Materials aus dem vorderen Bereich 21 in gezielter Weise auf die verschiedenen Riesel- und Nachfließeigenschaften des auszubringenden Materials in einfacher Weise anpassen. Anstelle der Abdeckplättchen 23 können die Abdeckelemente in nicht dargestellter Weise als Verschlußstopfen ausgebildet sein.

In einer weiteren, nicht dargestellten Ausgestaltung können die Abdeckelemente 23 als eine Abdeckplatte ausgebildet sein. In dieser Ausgestaltung weist die Abdeckplatte eine dachförmige und an die Kontur des Entlastungselementes 19 angepasste Ausgestaltung auf.

## Patentansprüche

1. Gezogene Verteilmaschine, insbesondere Düngerstreuer, insbesondere zum Ausbringen von körnigem Material, mit einem Rahmen (1), einem vorzugsweise einachsigem Fahrwerk (2) oder Tandemfahrwerk, einer Zugdeichsel (5) und einem auf dem Rahmen (1) befestigten Vorratsbehälter (6) und mit zumindest einem Streuorgan (12) zum Verteilen des Materials, welches auf der der Zugdeichsel (5) abgewandten Endseite (20) des Vorratsbehälters (6) angeordnet ist, und mit einem angetriebenen Transportband (11) zum Materialfördern zu dem auf der der Zugdeichsel (5) abgewandten Endseite (20) des Vorratsbehälters (6) angeordneten Streuorgan (12), wobei der Vorratsbehälter (6) als langgestreckter Behälter ausgebildet ist und im unteren Bereich des Vorratsbehälters (6) das über Umlenkrollen (13) geführte, umlaufende und sich über die gesamte untere Breite des Vorratsbehälters (6) erstreckende Transportband (11) angeordnet ist, wobei im unteren Bereich des Vorratsbehälters (6) oberhalb des Transportbandes (11) ein das Transportband (11) in zwei im Abstand zueinander entstehende Förderbereiche (18) aufteilendes, dachförmig ausgebildetes und sich über zumindest einen Teilbereich der Länge des Vorratsbehälters (6) und des Transportbandes (11) erstreckendes Entlastungselement (19) angeordnet ist, **dadurch gekennzeichnet, dass** das Entlastungselement (19) sich von der der Zugdeichsel (5) abgewandten Endseite des Vorratsbehälters (6) in Richtung der Zugdeichsel (5) über nicht mehr als ¾ der Länge, vorzugsweise nicht mehr als die halbe Länge des Vorratsbehälters (6) oder Transportbandes erstreckt.

2. Gezogene Verteilmaschine nach Anspruch 1, **dadurch gekennzeichnet, dass** sich das Entlastungselement (19) in Draufsicht zumindest annähernd bis zur Achse (4) oder Mittelachse des Fahrwerkes (2) erstreckt.

3. Gezogene Verteilmaschine nach Anspruch 1, **dadurch gekennzeichnet, dass** in dem der Zugdeichsel (5) unmittelbar benachbarten Viertel, vorzugsweise Drittel der Länge des Vorratsbehälters (6) und/oder des Förderbandes (11) kein Entlastungselement (19) angeordnet ist.

4. Gezogene Verteilmaschine nach zumindest einem der vorstehenden Ansprüche, **dadurch gekennzeichnet, dass** das Entlastungselement (19) sich zumindest annähernd bis zur Achse (4) oder Mittelachse des Fahrwerkes (2), jedoch über nicht mehr als ¾, vorzugsweise 2/3 der Länge des Vorratsbehälters (6) erstreckt.

5. Gezogene Verteilmaschine nach zumindest einem der vorstehenden Ansprüche, **dadurch gekennzeichnet, dass** in den Dachflächen des Entlastungselementes (19) mehrere Durchtrittsöffnungen (22) für das körnige Material angeordnet sind.

6. Gezogene Verteilmaschine nach Anspruch 5, **dadurch gekennzeichnet, dass** die Durchtrittsöffnungen (22) durch zumindest ein Abdeckelement (23) zumindest teilweise abdeckbar und/oder verschließbar sind.

7. Gezogene Verteilmaschine nach Anspruch 6, **dadurch gekennzeichnet, dass** die Abdeckelemente (23) als Verschlußstopfen ausgebildet sind.

8. Gezogene Verteilmaschine nach Anspruch 6, **dadurch gekennzeichnet, dass** das Abdeckelement (23) als Abdeckplatte, vorzugsweise als dachförmige und an die Kontur des Entlastungselementes angepasste Abdeckplatte ausgebildet ist.

## Claims

1. Pulled distribution machine, in particular fertilizer spreader, in particular for discharging granular material, with a frame (1), a preferably single-axle chassis (2) or tandem chassis, a drawbar (5) and a storage container (6) which is fastened on the frame (1), and with at least one spreading member (12) for distributing the material, said spreading member being arranged on that end side (20) of the storage container (6) which faces away from the drawbar (5), and with a driven transport belt (11) for conveying material to the spreading member (12) which is arranged on that end side (20) of the storage container (6) which faces away from the drawbar (5), wherein the storage container (6) is designed as an elongate container and the revolving transport belt (11) which is guided via deflecting rollers (13) and extends over the entire lower width of the storage container (6) is arranged in the lower region of the storage container (6), wherein a discharge element (19) is arranged in the lower region of the storage container (6) above the transport belt (11), said discharge element dividing the transport belt (11) into two spaced-apart conveying regions (18), being of roof-shaped design and extending over at least a partial region of the length of the storage container (6) and of the transport belt (11), **characterized in that** the discharge element (19) extends from that end side of the storage container (6) which faces away from the drawbar (5) in the direction of the drawbar (5) over no more than three quarters of the length, preferably no more than half of the length, of the storage container (6) or transport belt.

2. Pulled distribution machine according to Claim 1, **characterized in that** the discharge element (19) extends in top view at least approximately as far as the axle (4) or central axle of the chassis (2).

3. Pulled distribution machine according to Claim 1, **characterized in that** no discharge element (19) is arranged in the quarter, preferably third, of the length of the storage container (6) and/or of the conveyor belt (11) directly adjacent to the drawbar (5) .

4. Pulled distribution machine according to at least one of the preceding claims, **characterized in that** the discharge element (19) extends at least approximately as far as the axle (4) or central axle of the chassis (2), but over no more than three quarters, preferably two thirds, of the length of the storage container (6).

5. Pulled distribution machine according to at least one of the preceding claims, **characterized in that** a plurality of passage openings (22) for the granular material are arranged in the roof surfaces of the discharge element (19).

6. Pulled distribution machine according to Claim 5, **characterized in that** the passage openings (22) are at least partially coverable and/or closable by at least one covering element (23).

7. Pulled distribution machine according to Claim 6, **characterized in that** the covering elements (23) are designed as closure stoppers.

8. Pulled distribution machine according to Claim 6, **characterized in that** the covering element (23) is designed as a covering plate, preferably as a covering plate which is roof-shaped and is matched to the contour of the discharge element.

## Revendications

1. Épandeur tracté, en particulier épandeur d'engrais, en particulier pour distribuer des matériaux granulaires, comprenant un cadre (1), un châssis de roulement (2) ayant de préférence un axe ou un châssis de roulement en tandem, un timon de traction (5) et un réservoir (6) fixé au cadre (1) et comprenant au moins un organe épandeur (12) pour épandre le matériau, qui est disposé du côté de l'extrémité (20) du réservoir (6) opposé au timon de traction (5), et comprenant une bande transporteuse entraînée (11) pour le transport de matériau jusqu'à l'organe épandeur (12) disposé du côté de l'extrémité (20) du réservoir (6) opposé au timon de traction (5), le réservoir (6) étant réalisé sous forme de réservoir allongé et dans la région inférieure du réservoir (6) étant disposée la bande transporteuse (11) guidée sur des poulies de renvoi (13), entraînée en circulation et s'étendant sur toute la largeur inférieure du réservoir (6), un élément de décharge (19) étant disposé dans la région inférieure du réservoir (6) au-dessus de la bande transporteuse (11), lequel divise la bande transporteuse (11) en deux régions de transport (18) à distance l'une de l'autre, est réalisé en forme de toit et s'étend sur au moins une région partielle de la longueur du réservoir (6) et de la bande transporteuse (11), **caractérisé en ce que** l'élément de décharge (19) s'étend depuis le côté d'extrémité du réservoir (6) opposé au timon de traction (5) dans la direction du timon de traction (5) sur pas plus de 3/4 de la longueur, de préférence sur pas plus de la moitié de la longueur du réservoir (6) ou de la bande transporteuse.

2. Épandeur tracté selon la revendication 1, **caractérisé en ce que** l'élément de décharge (19) s'étend, en vue de dessus, au moins approximativement jusqu'à l'axe (4) ou jusqu'à l'axe médian du châssis de roulement (2).

3. Épandeur tracté selon la revendication 1, **caractérisé en ce que** dans le quart, de préférence dans le tiers, immédiatement adjacent au timon de traction (5), de la longueur du réservoir (6) et/ou de la bande transporteuse (11), n'est disposé aucun élément de décharge (19).

4. Épandeur tracté selon au moins l'une quelconque des revendications précédentes, **caractérisé en ce que** l'élément de décharge (19) s'étend au moins approximativement jusqu'à l'axe (4) ou jusqu'à l'axe médian du châssis de roulement (2), toutefois pas sur plus de 3/4, de préférence 2/3, de la longueur de réservoir (6).

5. Épandeur tracté selon au moins l'une quelconque des revendications précédentes, **caractérisé en ce que** plusieurs ouvertures de passage (22) pour le matériau granulaire sont réalisées dans les surfaces en toit de l'élément de décharge (19).

6. Épandeur tracté selon la revendication 5, **caractérisé en ce que** les ouvertures de passage (22) peuvent être au moins en partie recouvertes et/ou fermées par au moins un élément de recouvrement (23).

7. Épandeur tracté selon la revendication 6, **caractérisé en ce que** les éléments de recouvrement (23) sont réalisés sous forme de bouchons de fermeture.

8. Épandeur tracté selon la revendication 6, **caractérisé en ce que** l'élément de recouvrement (23) est réalisé sous forme de plaque de recouvrement, de préférence sous forme de plaque de recouvrement en forme de toit adaptée au contour de l'élément de décharge.
